# EUROPÄISCHE PATENTSCHRIFT

(11) **EP 2 333 508 B1**
(45) Veröffentlichungstag und Bekanntmachung des Hinweises auf die Patenterteilung: **27.07.2016**
(21) Anmeldenummer: 10015476.4
(22) Anmeldetag: 09.12.2010
(51) Int. Cl.: G01L 7/08, G01L 19/00, G01L 19/04

(54) **Druckmittler mit Temperatursensor**
Pressure transmitter with temperature sensor
Transmetteur de pression doté d'un capteur de température

(30) Priorität: 25.03.2010 DE 102010012823; 11.12.2009 DE 102009057905
(43) Veröffentlichungstag der Anmeldung: 15.06.2011
(73) Patentinhaber: Armaturenbau GmbH, 46487 Wesel-Ginderich (DE)
(72) Erfinder: Vetter, Bernd, 08315 Bernsbach (DE)
(74) Vertreter: Demski, Siegfried

(56) Entgegenhaltungen:
- EP-A2- 0 893 676
- DE-A1- 10 232 315
- US-A- 5 070 706

## Beschreibung

Die Erfindung betrifft einen Druckmittler mit Temperatursensor zum Einsatz bei aggressiven oder hochviskosen Medien in Form eines Plattendruckmittlers, umfassend zumindest ein Druckmittlergehäuse mit einem in einer Ausnehmung eingelassenen Membranbett, einer Membran und zumindest einem Temperatursensor oder in Form eines Rohrdruckmittlers, umfassend einen rohrförmigen Körper mit einem in einer Ausnehmung eingelassenen Membranbett, einer ringförmigen Membran, welche fluiddicht dem Membranbett gegenüberliegend befestigt ist, und zumindest einem Temperatursensor.

Gattungsgemäße Druckmittier mit Temperatursensor sind in verschiedenen Ausführungsformen aus dem Stand der Technik bekannt. Typischer Weise werden einschraubbare Drucksensoren verwendet, welche zusätzlich einen Temperatursensor im Gehäuse aufweisen. Die Erfindung betrifft hingegen einen Druckmittler, der aus einem Druckmittlergehäuse und einer Membran besteht. Derartige Druckmittter werden überall dort eingesetzt, wo aggressive oder hochviskose Medien verwendet werden, sodass die Notwendigkeit besteht eine Membran einzusetzen, welche den Messstoff von einer gegebenenfalls verwendeten Messflüssigkeit trennt. Durch diese Maßnahme soll insbesondere sichergestellt werden, dass keine Verunreinigungen der Messflüssigkeit eintreten und das zu messende Ergebnis verfälschen oder den Messstoff verunreinigen. Die Messflüssigkeit wird im Weiteren dazu verwendet, um den gemessenen Druck auf eine geeignete Messeinrichtung zu übertragen. Neben einer Druckmessung wird jedoch in vielen Fällen gleichzeitig eine Temperaturmessung des Messstoffes gewünscht, sodass kombinierte Geräte zum Einsatz kommen.

Aus der DE 10 2006 043 324 A1 ist beispielsweise ein Steckfühler zur kombinierten Druck- und Temperaturmessung bekannt, welcher zur Messung eines fluiden Mediums vorgesehen ist. Beispielsweise für den Einsatz in einem Kühlmittelkreislauf einer Klimaanlage eines Kraftfahrzeuges. Der hierbei verwendet Steckfühler weist einen Sensorkörper mit einem Drucksensor auf, wobei durch eine Durchgangsbohrung eine Verbindung des nicht besonders geschützten Drucksensors mit dem fluiden Medium erfolgt. Daneben ist in dem Sensorkörper in einer weiteren Bohrung ein Temperatursensor aufgenommen. Diese Art von Sensoreinheit weist jedoch den Nachteil auf, dass keine Trennung zwischen dem Drucksensor und dem Messstoff vorliegt, sodass keine hochviskosen öder aggressiven Medien gemessen werden können. Darüber hinaus ist der Abstand zwischen Temperatursensor und Drucksensor so groß gewählt worden, dass Messverfälschungen nicht ausgeschlossen werden können.

Aus der DE 10 2005 060 652 A1 ist ebenfalls ein kombiniertes Druck- und Temperaturmessmodul bekannt. Bei dieser Ausführungsvariante wird eine Membran verwendet, welche durch den Messstoff beaufschlagt wird und mit einem in einem Gehäuse aufgenommenen Drucksensor zusammenwirkt. Zusätzlich ist bei dieser Ausführungsvariante im Drucksensorgehäuse in einem zentralen Bereich ein Hohlraum ausgebildet, der zur Aufnahme eines Temperatursensors vorgesehen ist. Der Temperatursensor liegt hierbei unterhalb der Membran, sodass nicht die Temperatur des Messstoffes, sondern der Druckmittlerflüssigkeit gemessen wird und durch einen Temperaturdrift nur annähernd richtige Messwerte für die Temperatur des Messstoffes erzielt werden können.

Aus der DE 10 2005 060 651 A1 ist ebenfalls ein kombinierter Druck- und Temperatursensor bekannt. Bei dieser Ausführungsvariante ist in einem Druckmittlergehäuse eine Bohrung vorgesehen, welche eine Öffnung zur Aufnahme des Messstoffes aufweist und am Ende der Bohrung ist die Membran und ein Drucksensor angeordnet. Zusätzlich besitzt das Druckmittlergehäuse eine weitere Bohrung in der ein Temperatursensor angeordnet ist, wobei der Temperatursensor durch eine haubenförmige Abdeckung geschützt ist.

Aus der EP 0 893 676 A2 ist eine kombinierte Druck- und Temperaturmessvorrichtung bekannt, welche in einem Gehäuse integriert ist, wobei das Gehäuse zur Aufnahme eines Substrates und einer Membran vorgesehen ist. Das Substrat und die Membran werden voneinander beabstandet zwischen zwei Gehäuseteilen und entsprechenden Abdichtungsmitteln klemmend gehalten, wobei zwischen dem Substrat und der Membran eine Glasdichtung angeordnet ist, sodass die Membran von dem Substrat beabstandet und von diesem elektrisch isoliert ist. Auf der Membran kann zentrisch ein Temperatursensor in Form eines Thermistors angeordnet sein. Dabei muss die Membran jedoch mit einer elektrisch leitenden Beschichtung in Form von Leiterbahnen zur Kontaktierung des Temperatursensors versehen werden. Dies erhöht zum Einen die Herstellungskosten für die Membran wesentlich und führt zum Anderen dazu, dass die Membran selbst zur Vermeidung eines elektrischen Kurzschlusses aus einem elektrischen Isolator bestehen muss. Dies hat zur Folge, dass bewährte, vergleichsweise günstige, ein gutes Verformungsverhalten aufweisende, metallische Membranen nicht verwendet werden können. Ferner sind zahlreiche Prozessflüssigkeiten, deren Drücke und Temperaturen in einer verfahrenstechnischen Anlage gemessen werden sollen, elektrische Leiter, wie zum Beispiel nicht demineralisiertes Wasser, Säuren oder Basen. Daher ist diese Ausführungsform des Gegenstandes dieser Druckschrift eine teure Speziallösung. In einer alternativen Ausführungsform ist der Thermistor über starre Leiter von der Membran beabstandet in der Messvorrichtung angeordnet, wobei sich die starren Leiter von dem Thermistor durch die Membran in das Substrat erstrecken, wo diese elektrisch kontaktiert werden. Dadurch, dass die starren Leiter in einem Bereich der Messvorrichtung angeordnet sind, in welchem sich die Prozessflüssigkeit befindet, deren Druck und Temperatur gemessen werden soll, müssen die Leiter zur Vermeidung von Kurzschlüssen eine elektrisch Isolierende Ummantelung aufweisen. Dadurch entsteht aber das Problem der beständigen Abdichtung der Durchbruchstellen, an denen die Leiter durch die Membran geführt sind, da eine Verschweißung oder Verlötung bei einem Metall-Isolator-Kontakt nicht möglich ist.

Aus der DE 102 32 315 A1 ist ein kombinierter Temperatur- und Druckfühler bekannt, bei dem der Temperatursensor in einem Durchbruch aufgenommen ist, während demgegenüber die Membran über einen parallel verlaufenden Durchbruch mit dem zu messenden Medium beaufschlagt wird.

Die bekannten Ausführungsformen eines Druck- und Temperatursensors weisen den gemeinsamen Nachteil auf, dass der Ort der Temperatur- und Druckmessung beabstandet ist und somit zu Messwertverfälschungen führt. Darüber hinaus sind Ausführungen bekannt bei denen der Temperatursensor unterhalb der Membran angeordnet ist, sodass nur die Temperatur der Messübertragungsflüssigkeit gemessen wird, aber keine direkte Messung des Messstoffes erfolgt.

Der vorliegenden Erfindung liegt die Aufgabe zugrunde einen kombinierten Druckmittler und Temperatursensor aufzuzeigen, welcher die aus dem Stand der Technik bekannten Nachteile vermeidet und wesentlich bessere Messergebnisse hinsichtlich der Temperatur und des Druckes liefert.

Erfindungsgemäß wird die Aufgabe für einen Plattendruckmittler dadurch gelöst, dass der wenigstens eine Temperatursensor in direktem Kontakt mit dem Messstoff steht, wobei der Temperatursensor mit seinem Messfühler durch eine Ausnehmung, Einbuchtung oder Bohrung der Membran hindurchragt.

Erfindungsgemäß wird die Aufgabe für einen Rohrdruckmittler dadurch gelöst, dass eine annähernd rohrförmige Membran in einem rohrförmigen Körper einliegt und endseitig mit diesem verbunden ist, wobei ein Druckraum über einen Ringkanal und eine Bohrung mit einem Messsystem in Verbindung steht, und wobei zumindest ein Temperatursensor endseitig der Membran oder in Höhe des Ringkanals befestigt ist und mit seinem Messfühler in den Innenraum des rohrförmigen Körpers ragt.

Weitere vorteilhafte Ausgestaltungen der Erfindung ergeben sich aus den Unteransprüchen.

Durch die Anordnung des Temperatursensors in unmittelbarer Nähe der Membran wird eine exakte Messung sowohl der Temperatur als auch des Druckes ohne Verfälschung des Messergebnisses gewährleistet. Ein vorhandener Temperaturdrift aufgrund von beabstandeten Messungen kann gänzlich ausgeschlossen werden, sodass zufriedenstellende Ergebnisse sowohl hinsichtlich der Temperatur- messung als auch der Druckmessung für die Auswertung der Messsignale vorliegen. Hierbei kommt es besonders darauf an, dass der Temperatursensor in unmittelbarer Nähe der Membran angeordnet ist, weil ansonsten die gleichzeitige Messung von Temperatur und Druck an unterschiedlichen Orten zu deutlichen Messverfälschungen führt und nicht das gewünschte Ergebnis liefern können. Darüber hinaus wird durch die nachstehend beschriebenen Ausführungsformen sichergestellt, dass der direkte Kontakt der Membran und des Temperatursensors mit dem Messstoff vorliegt, sodass unter Ausschluss von Temperaturgradienten fehlerhafte Messungen vermieden werden.

In Ausgestaltung der Erfindung ist hierbei für eine erste Variante vorgesehen, dass der wenigstens eine Temperatursensor annähernd senkrecht zur Membranebene angeordnet im Druckmittlergehäuse befestigt ist, wobei der Temperatursensor durch eine Ausnehmung oder Einbuchtung der Membran hindurchragt, sodass die Membran um den Temperatursensor herumgeführt ist. Die Membran selbst, welche beispielsweise bei einem Plattendruckmittler kreisrund ausgebildet ist, liegt mit einem äußeren Rand auf einer Auflagefläche auf und wird mit dem Druckmittlergehäuse verbunden, beispielsweise verlötet oder verschweißt. Bei der kombinierten Form eines Druckmittlers mit Temperatursensor weist eine derartige Membran eine am Rand befindliche Ausnehmung oder Einbuchtung auf, sodass der Temperatursensor beispielsweise im Druckmittlergehäuse befestigt werden kann und trotzdem in unmittelbarer Nähe der Membran die Temperatur des Messstoffes aufnehmen kann. Die Verbindung zwischen Membran und Druckmittlergehäuse erstreckt sich hierbei um die Ausnehmung oder Einbuchtung herum.

Eine zweite Variante sieht eine mittige oder exzentrisch angeordnete Bohrung innerhalb der Membran zur Aufnahme des Temperatursensors vor, wobei der Temperatursensor unmittelbar mit der Membran verlötet oder verschweißt sein kann. Bei dieser Ausführung ist der Temperatursensor somit Bestandteil der Membran und wird unmittelbar in dieser integriert. Die Position des Temperatursensors innerhalb der Membran kann hierbei zentrisch oder gegebenenfalls exzentrisch erfolgen, beispielsweise im Randbereich der Membran, je nach konstruktiver Ausführung des Druckmittlergehäuses. Soweit der Temperatursensor mittig mit der Membran verbunden ist kann eine Ringmembran verwendet werden. Soweit der Temperatursensor unmittelbar mit der Membran verschweißt oder verlötet ist, werden die Anschlüsse des Temperatursensors spiralförmig angeordnet, sodass durch die Anschlüsse das Verhalten der Membran nicht beeinflusst wird. Die spiralförmigen Anschlüsse wirken hierbei wie eine Feder und gestatten somit elastische Bewegungen der Membran.

Eine weitere Ausführungsform sieht vor, dass die Membran eine zentrisch angeordnete Bohrung aufweist, welche durch das Membranbett oder ein Teil des Druckmittlergehäuses ringförmig umschlossen und abgestützt ist. Eine derartige geformte Membran ist ebenfalls zur Aufnahme eines Temperatursensors geeignet, wobei die Membran zusätzlich in der zentrischen Mitte abgestützt ist, sodass der Temperatursensor unmittelbar im Druckmittlergehäuse befestigt werden kann. Die Membran selbst, mit Ihrer aktiven Messfläche, ist somit randseitig als auch im zentrischen Bereich abgestützt.

Eine weitere Ausführungsform sieht vor, dass eine kreisringförmige Membran eine partielle Einbuchtung oder Ausnehmung aufweist, welche im Randbereich der Membran angeordnet ist und einen Teilbereich des Druckmittlergehäuses freigibt. Der freigelegte Teilbereich des Druckmittlergehäuses dient dazu, an dieser Position einen Temperatursensor unmittelbar im Druckmittlergehäuse zu befestigen, sodass der Temperatursensor in der Nähe der Membran angeordnet werden kann.

In einer weiteren besonderen Ausgestaltung wird ein Rohrdruckmittler mit Temperatursensor vorgeschlagen, wobei eine annähernd rohrförmige Membran in einem rohrförmigen Körper einliegt und endseitig mit dem rohrförmigen Körper verbunden ist, wobei ein Druckraum durch einen Ringkanal und eine Bohrung eine Verbindung zu einem Messsystem ermöglicht, und wobei zumindest ein Temperatursensor endseitig der Membran oder in Höhe des Ringkanals befestigt ist und mit einem Messfühler in den Innenraum des rohrförmigen Körpers ragt. Rohrdruckmittler werden vorzugsweise unmittelbar mit Flanschanschlüssen in ein vorhandenes Rohrleitungssystem eingebunden. Der erfindungsgemäße Rohrdruckmittler weist eine annähernd rohrförmige Membran auf, welche vorzugsweise mit dem zylindrischen Körper endseitig verschweißt oder verlötet ist. Zwischen der Membran und dem zylindrischen Körper entsteht hierbei ein Zwischenraum, welcher als Druckraum genutzt wird, um ein Messsystem anzuschließen. Der Druckraum kann hierbei mit einer Messflüssigkeit gefüllt serin, es besteht aber auch die Möglichkeit mit einem Gas zu arbeiten. Um eine Druck- und Temperaturmessung zu ermöglichen ist hierzu vorgesehen, dass ein Temperatursensor in der Nähe der Flansche angeordnet ist, wobei gegebenenfalls an beiden Enden ein Temperatursensor vorgesehen werden kann. Der Temperatursensor ragt mit einem Messfühler durch eine vorhandene Bohrung in den Innenraum des zylindrischen Körpers, sodass die Temperatur unmittelbar in der Nähe der Membran gemessen werden kann.

Vorzugsweise wird hierbei der Temperatursensor, um die Membran nicht zu zerstören, im endseitigen Bereich der Membran angeordnet.

Eine weitere Ausführungsform sieht vor, dass der Temperatursensor in einer mittigen Position zur Membran, und zwar in Höhe eines ausgebildeten Ringkanals im zylindrischen Körper angeordnet ist. Somit kann eine Temperaturfassung unmittelbar im Membranbereich erfolgen. Hierbei bestehen zwei Möglichkeiten, es können gegebenenfalls zwei Membranen verwendet werden, welche bis zum Ringkanal heranreichen, sodass der Messfühler des Temperatursensors zwischen den Membranen in den Innenraum des zylindrischen Körpers ragt, wobei die dann ausgebildeten Druckräume hinter den Membranen miteinander verbunden sind und ein Messsystem anschließbar ist oder zwei Messsysteme verwendet werden. Alternativ besteht die Möglichkeit, dass der Temperatursensor mit seinem Messfühler durch eine einzelne vorhandene Membran hindurch ragt und mit dieser verlötet oder verschweißt ist. In diesem Fall ist der Messfühler in der Art ausgebildet, dass der Messfühler der elastischen Bewegung der Membran folgt und somit keine Beeinträchtigung der Kennlinie vorliegt. Der Messfühler ist insoweit unmittelbar mit der Membran verschweißt oder verlötet und weist im rückwärtigen Bereich gegebenenfalls spiralförmig angeordnete Zuleitungen auf, welche in soweit elastisch ausgebildet sind, dass die Membran durch den eingeschweißten oder eingelöteten Messfühler nicht in ihrer Funktion gestört wird.

In allen aufgezeigten Ausführungsvarianten ist hierbei der Temperatursensor frontbündig zur Membran angeordnet, sodass sowohl der Temperatursensor als auch die Membran mit dem Messstoff in Kontakt steht und eine exakte Temperatur- und Druckmessung des Messstoffes erfolgen kann. In besonderen Fällen kann der Temperatursensor gegenüber der Membran hervorstehen, soweit dies von den Kunden gewünscht wird. Als Temperatursensor kommen alle gängigen Temperaturmesssysteme in Betracht. Beispielsweise kann die Temperaturmessung über ein Sensorelement PT 100 oder über ein Thermoelement erfolgen. Ebenso kann ein optoelektronisches Messsystem in den Druckmittler integriert werden. Die elektronischen Ausgangssignale von Druckmittler und Temperatur- sensor können vorzugsweise in einem Stecker zusammengefasst werden, wobei beispielsweise ein 5-poliger Strecker zum Einsatz kommen kann. Hierbei können mechanische, elektronische oder optische Messsysteme für den Druck oder elektronische oder optische Messsysteme für die Temperatur verwendet werden, wobei vorzugsweise ein elektrisches, faseroptisches Messsystem verwendbar ist.

Vorzugsweise ist die Membran bei den verschiedenen Ausführungsvarianten hierbei mit dem Druckmittlergehäuse verlötet oder verschweißt, um die erforderlichen Dichtigkeitsanforderungen zu erfüllen.

In besonderer Ausgestaltung der Erfindung ist vorgesehenen, dass ein zweiter Temperatursensor unterhalb der Membran liegend angeordnet ist. Dieser Temperatursensor dient dazu die Temperatur der Übertragungsflüssigkeit zu messen und kann zusätzlich zur Auswertung gegenüber der Temperatur des Messstoffes herangezogen werden, um beispielsweise eine Kompensation des Messfehlers der Messflüssigkeit ausgleichen zu können.

In weiterer Ausgestaltung ist vorgesehen, dass die Membran aus einem Sonderwerkstoff, vorzugsweise Tantal, V4A, Titan, Nickel, Monel, Duplex, Inconel oder Hastelloy C 276 besteht oder mit einem Sonderwerkstoff der vorgenannten Art beschichtet ist. Das Druckmittlergehäuses selbst kann aus Edelstahl, zum Beispiel V2A oder V4A, oder einem Sonderwerkstoff, vorzugsweise Tantal, Titan, Nickel, Monel, Duplex, Inconel oder Hastelloy C 276 bestehen oder mit einem Sonderwerkstoff der vorgenannten Art beschichtet sein.

Der wesentliche Erfindungsgedanke der vorliegenden Erfindung besteht darin, die Position des Temperatursensors in unmittelbarer Nähe der Membran vorzusehen, damit keine Messverfälschungen auftreten und die kombinierte Druck- und Temperaturmessung exakte Messwerte liefert, welche auf einen Bereich ortsnahe der Membran bezogen sind. Hierzu werden verschiedene Ausgestaltungen einer Membran und des Druckmittlergehäuses aufgezeigt, um eine Befestigung des Temperatursensors in unmittelbarer Nähe der Membran vornehmen zu können.

Die Erfindung wird im Weiteren anhand der Figuren näher erläutert.

Es zeigt
- Fig. 1: in drei Einzelansichten in jeweils einer Draufsicht und einer geschnittenen Seitenansicht ein erfindungsgemäßes Druckmittlergehäuse,
- Fig. 2: in jeweils drei teilweise geschnittenen perspektivischen Ansichten das Druckmittlergehäuse mit Temperatursensor in Form eines Thermoelementes,
- Fig. 3: in jeweils drei Ansichten in einer Draufsicht und einer geschnittenen Seitenansicht das Druckmittlergehäuse mit Membran und Temperatursensor in Form eines Thermoelementes,
- Fig. 4: in einer perspektivischen Teilansicht einen erfindungsgemäßen Rohrdruckmittler mit einem Temperätursensor,
- Fig. 5: in einer geschnittenen Seitenansicht den aus Figur 4 bekannten Rohrdruckmittler,
- Fig. 6: in einer perspektivischen Teilansicht einen Rohrdruckmittler mit zwei Temperatursensoren,
- Fig. 7: in einer geschnittenen Seitenansicht den aus Figur 6 bekannten Rohrdruckmittler,
- Fig. 8: in einer perspektivischen Teilansicht eine weitere Ausführungsform eines Rohrdruckmittlers mit einem Temperatursensor,
- Fig. 9: in einer geschnittenen Seitenansicht den aus Figur 8 bekannten Rohrdruckmittler,
- Fig. 10: in einer perspektivischen Teilansicht eine weitere Ausführungsform eines Rohrdruckmittlers und
- Fig. 11: in einer geschnittenen Seitenansicht den aus Figur 10 bekannten Rohrdruckmittler.

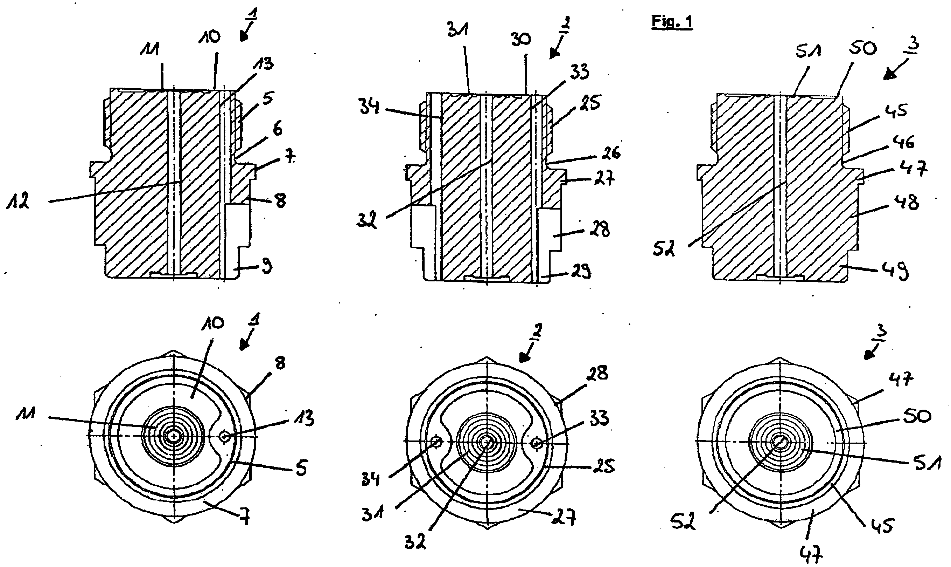

Figur 1 zeigt in jeweils drei Einzelansichten in einer Draufsicht und einer geschnittenen Seitenansicht ein Druckmittlergehäuse 1, 2, 3 in unterschiedlicher Ausgestaltung. Die drei Druckmittlergehäuse 1, 2, 3 sind von ihren äußeren Abmessungen nahezu identisch aufgebaut, weichen jedoch aufgrund unterschiedlicher Aufnahmebohrungen für einen Temperatursensor in Form eines Thermoelementes voneinander ab. In der linken Darstellung ist eine Ausführungsvariante gezeigt, bei der das Druckmittlergehäuse 1 in einer einstückigen Form einen zylindrischen Abschnitt 5 aufweist, welcher über eine Hohlkehle 6 in einen radialen Vorsprung 7 übergeht. Im Anschluss an den radialen Vorsprung 7 ist ein Sechskant 8 ausgebildet, mit Hilfe dessen das Druckmittlergehäuse 1 eingeschraubt werden kann. Aus diesem Grunde ist der Abschnitt 5 vorzugsweise mit einem Außengewinde ausgestattet. Der Sechskant 8 geht dann in einen sich verjüngenden Abschnitt 9 über. Auf der Stirnfläche 10 des Abschnittes 5 ist ein Membranbett 11 ausgebildet, welches durch eine Membran abgedeckt wird. Die Membran wird hierbei mit der Stirnfläche 10 entweder verlötet oder verschweißt. Über eine Bohrung 13 besteht eine Verbindung zu einem Druckraum, welcher zwischen dem Membranbett 11 und der Membran ausgebildet ist. Die Bohrung 13 führt zum rückwärtigen Teil des Druckmittlergehäuses 1, sodass über eine Anschlussverschraubung ein Messwerk oder eine Druckleitung angeschlossen werden kann. Des Weiteren verfügt das Druckmittiergehäuse 1 über eine außermittig angeordnete Bohrung 13, welche zur Aufnahme eines Temperatursensors vorgesehen ist.

Die mittleren Teilfiguren zeigen ebenfalls ein Druckmittlergehäuse 2, welches einen radialen Abschnitt 25 mit einer sich anschließenden Hohlkehle 26, einem radialen Vorsprung 27 und einem Sechskant 28 aufweist, wobei sich der Sechskant 28 radial in einen Abschnitt 29 verjüngt. Dieses Druckmittlergehäuse 2 besitzt auf seiner Stirnfläche 30 ebenfalls ein Membranbett 31, wobei das Membranbett 31 zusammen mit der Membran einen Druckraum bildet, welcher über eine zentrische Bohrung 32 einen Anschluss eines Messwerkes ermöglicht. Im Unterschied zur ersten Ausführungsvariante des Druckmittlergehäuses 1 weist das Druckmittlergehäuse 2 zwei außermittig angeordnete Bohrungen 33, 34 auf, welche jeweils zur Aufnahme eines Temperatursensors vorgesehen sind.

Die rechten Teilfiguren zeigen ein Druckmittlergehäuse 3 mit einem radialen Abschnitt 45, der in eine Hohlkehle 46, einen radialen Vorsprung 47 und in einen Sechskant 48 übergeht, an den sich ein radialer Abschnitt 49 anschließt. In der Stirnfläche 50 ist ein Membranbett 51 eingearbeitet. Das Membranbett 51 und die Membran schließen einen Druckraum ein, welcher durch eine Bohrung 52 einen Anschluss eines Messwerkes ermöglicht. Gleichzeitig dient die Bohrung 52 zur Aufnahme eines Temperatursensors für die Temperaturmessung.

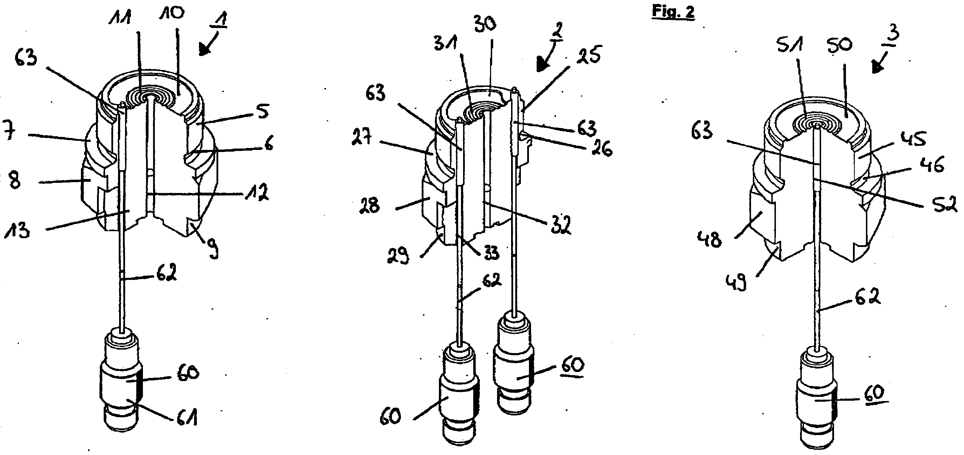

Figur 2 zeigt in jeweils drei Einzelansichten in perspektivischer, teilweise geschnittener Ansicht die Druckmittlergehäuse 1, 2, 3 entsprechend der Ausgestaltung gemäß Figur 1. Zusätzlich ist aus diesen Zeichnungen die Lage eines Temperatursensors in Form eines Thermoelementes 63 beziehungsweise zweier Temperatursensoren in Form von Thermoelementen 63 zu sehen, welche in die jeweiligen Bohrungen 13 beziehungsweise 32, 33 oder 52 eingesetzt sind. Die Temperaturmesseinrichtungen 60 bestehen hierbei aus einem Gehäuse 61 und einem Rohr 62 mit Temperatursensor 63.

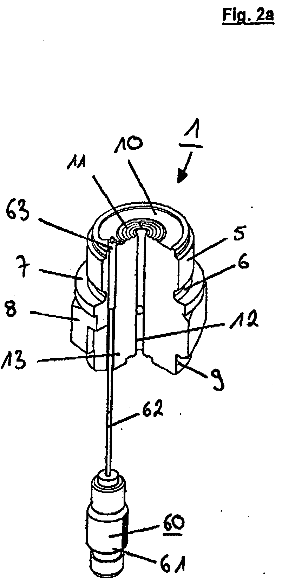

Figur 3 zeigt in jeweils drei Teilansichten die aus Figur 1 und 2 bekannten Druckmittlergehäuse nach dem erfolgten Zusammenbau mit der Membran. Die Druckmittlergehäuse 1, 2, 3 sind jeweils in einer geschnittenen Seitenansicht und einer Draufsicht dargestellt und entsprechen den Darstellungen aus Figur 1 und 2 mit einer Temperaturmesseinrichtung 60, wobei zusätzlich oberhalb des Membranbettes 11, 31, 51 eine Membran 70, 71 und 72 angeordnet ist. Die Membran 70, 71, 72 wird mit der Stirnfläche 10, 30, 50 des jeweiligen Druckmittlergehäuses 1, 2, 3 verlötet oder verschweißt. Entsprechend der Anordnung der Temperatursensoren 63 in Form eines Thermoelementes weist die Membran 70 eine Ausnehmung 73 auf, sodass ein Teil der Stirnfläche 10 freiliegt, in welche die Bohrung 13 zur Aufnahme des Temperatursensors 63 mündet. Somit entsteht der entscheidende Vorteil, dass der Temperatursensor 63 in unmittelbarer Nähe der Membran 70 angeordnet ist und sowohl die Membran 70 als auch der Temperatursensors 63 mit dem Messstoff in Berührung kommt und korrekte Druck- und Temperaturmessungen ermöglicht.

Die mittleren Teilfiguren zeigen eine Lösung bei der zwei Temperaturmesseinrichtungen 60 verwendet werden, welche mit Hilfe eines Temperatursensors 63 in den jeweiligen Bohrungen 33, 34 eine direkte Temperaturmessung ermöglichen. Die Membran 71 besitzt demzufolge zwei Ausnehmungen 74, 75, sodass die Stirnfläche 30 mit zwei diametral gegenüberliegenden Ausnehmungen 74, 75 freigestellt ist und einen direkten Kontakt des Temperatursensors 63 mit dem Messstoff ermöglicht und demzufolge eine korrekte Druck- und Temperaturmessung ermöglicht.

Die rechten Teilfiguren der Figur 3 zeigen eine Lösung, bei der nur eine Temperaturmesseinrichtung 60 in dem Druckmittlergehäuse 3 aufgenommen ist, und zwar in der zentrisch angeordneten Bohrung 52. Eine derartige Lösung ermöglicht es den Temperatursensor 63 in Form eines Thermoelementes entweder unterhalb der Membran 72 anzuordnen oder, wenn die Membran 72 einen Durchbruch aufweist, kann der Temperatursensor 63 durch die Membran hindurch geschoben und mit dieser zusätzlich verlötet werden. Somit ist auch bei dieser Lösung sichergestellt, dass sowohl der Temperatursensor 63 und die Membran 72 mit dem Messstoff in unmittelbarem Kontakt stehen. Soweit der Temperatursensor 63 unterhalb der Membran angeordnet ist, erfolgt eine Temperaturmessung mit einer geringen Abweichung zur Temperatur des Messstoffes aufgrund auftretender Temperaturverluste unterhalb der Membran.

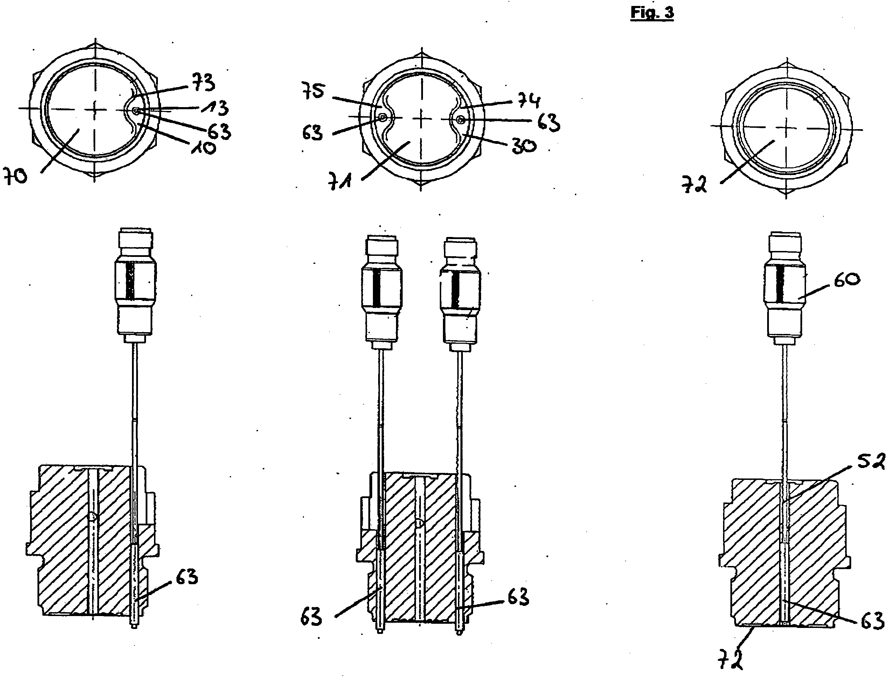

Figur 4 zeigt in einer perspektivischen Teilansicht einen erfindungsgemäßen Rohrdruckmittler 80, welcher aus einem rohrförmigen Körper 81 mit endseitigen Flanschanschlüssen 82, 83 besteht. Die Flanschanschlüssen 82, 83 ermöglichen den Einbau des Rohrdruckmittlers 80 in eine vorhandene Rohrleitung mit Hilfe eines nicht dargestellten Überwurfbügels. Der Rohrdruckmittler 80 weist eine innen liegende Membran 84 auf, welche annähernd rohrförmig ausgebildet ist und endseitig mit dem Körper 81 verbundenen, insbesondere verschweißt oder verlötet ist. Unterhalb der Membran 84 ist ein Ringkanal 85 ausgebildet, welcher in eine radiale Bohrung 86 mündet. Die Bohrung 86 dient im Weiteren zum Anschluss eines Messsystems, welches eingeschraubt werden kann, wobei die vorhandene Bohrung 86 als Gewindebohrung ausgebildet ist.

Das Messsystem kommt hierbei in der Ausnehmung 87 zu liegen. Des Weiteren ist eine Temperaturmesseinrichtung 88 vorgesehen, welche mit einem Temperatursensor 89 in einer Gewindebohrung 90 des rohrförmigen Körpers 81 eingeschraubt ist. Die Positionen des Temperatursensors 89 ist hierbei so gewählt, dass die erforderliche Gewindebohrung 90 nicht im Bereich der Membran 84 angeordnet ist, sondern in der Nähe des Flanschanschlusses 82. Somit nimmt der Temperatursensor 89 eine Position endseitig der Membran 84 ein und kann trotzdem die Temperatur des Mediums in unmittelbarer Nähe der Membran 84 messen.

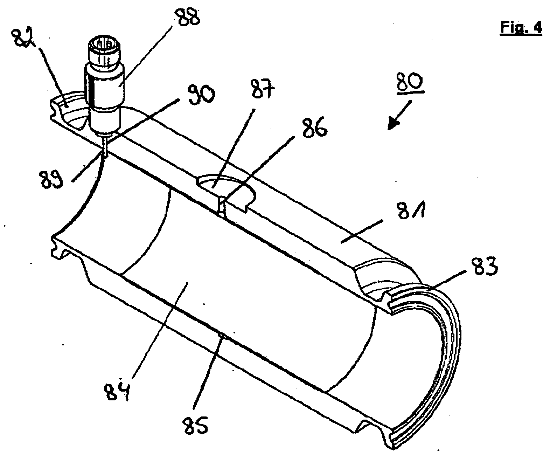

Figur 5 zeigt in einer geschnittenen Seitenansicht den Rohrdruckmittler 80 gemäß Figur 4.

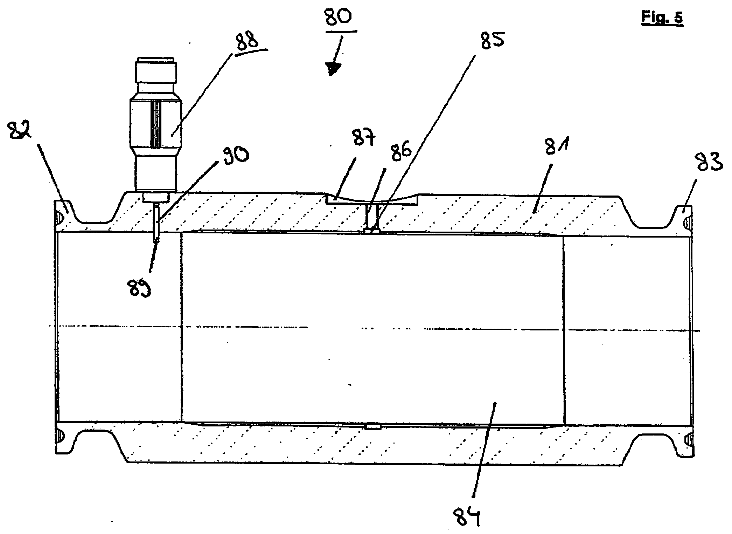

Figur 6 zeigt in einer perspektivischen Teilansicht eine weitere Ausführungsvariante eines Rohrdruckmittlers 100, welcher ebenfalls einen rohrförmigen Körper 101 aufweist, welcher endseitig mit einem Flanschanschluss 102 beziehungsweise 103 zur Verbindung mit weiteren Rohrelementen ausgestattet ist. Eine Membran 104 ist endseitig mit dem Körper 101 verbunden, wobei ein Ringkanal 105 zwischen Membran und dem rohrförmigen Körper 101, ausgebildet ist. Der Ringkanal 105 endet in einer Gewindebohrung 106, die in eine Vertiefung 107 mündet, sodass ein Messsystem angeschlossen werden kann. Gegenüber der Ausgestaltung des Rohrdruckmittlers 80 ist dieser Rohrdruckmittler 100 mit zwei Temperaturmesseinrichtungen 108, 109 ausgestattet, welche mit ihren Temperatursensoren 110, 111 bis in den Innenraum des rohrförmigen Körpers 101 ragen. Die beiden Temperatursensoren 110, 111 sind endseitig der rohrförmigen Membran 104 angeordnet, sodass der Bereich der Membran durch die erforderliche Gewindebohrungen für die Temperatursensoren 110, 111 nicht beschädigt wird.

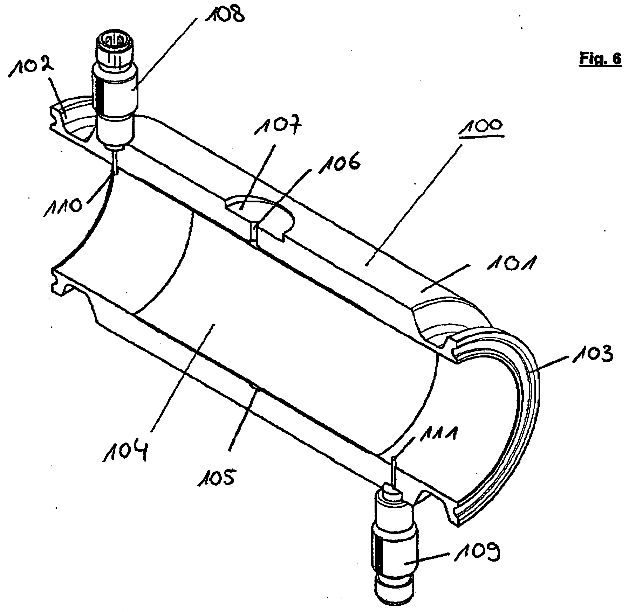

Figur 7 zeigt in einer geschnittenen Seitenansicht den aus Figur 6 bekannten Rohrdruckmittler 100 nochmals mit zwei Temperaturmesseinrichtungen 108, 109.

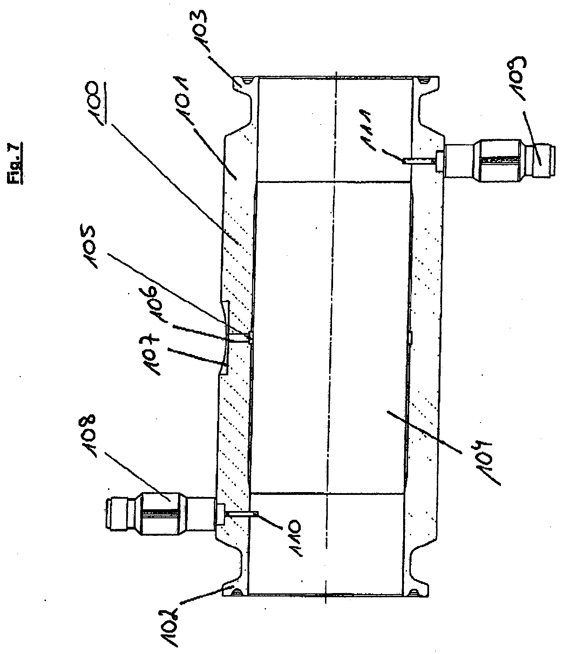

Figur 8 zeigt in einer perspektivischen Teilansicht eine weitere Ausführungsvariante eines Rohrdruckmittlers 120, welcher ebenfalls einen rohrförmigen Körper 121 aufweist, der endseitig mit Flanschanschlüssen 122 beziehungsweise 123 ausgestattet ist. Eine Temperaturmesseinrichtung 124 ist bei dieser Ausführungsvariante in Höhe eines Ringkanals 125 angeordnet und ragt mit seinem Temperatursensor 127 durch eine Bohrung 126 in den Innenraum des rohrförmigen Körpers 121. Der Temperatursensor 127 wird hierbei durch den Ringkanal 125 und die Membran 128 hindurch bis in den Innenraum geführt, sodass eine exakte Temperaturmessung erfolgen kann. Bei dieser Variante ist der Temperatursensor 127 unmittelbar mit der Membran zusätzlich verlötet, wodurch die erforderliche Dichtigkeit der Membran gewährleistet ist.

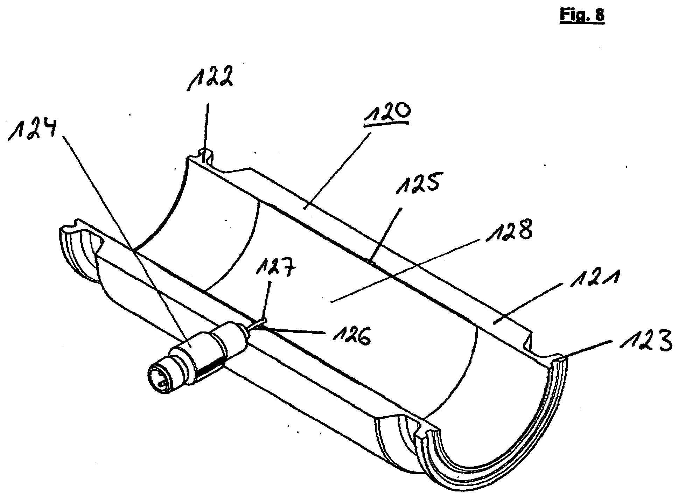

Figur 9 zeigt in einer geschnittenen Seitenansichten den aus Figur 8 bekannten Rohrdruckmittler 120 mit einer Temperaturmesseinrichtung 124.

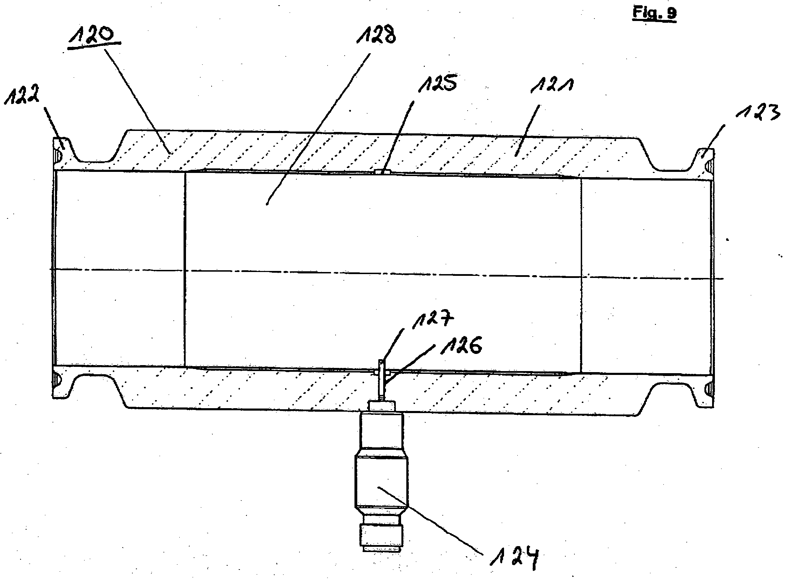

Figur 10 zeigt in einer perspektivischen Teilansicht eine weitere Ausführungsvariante eines erfindungsgemäßen Rohrdruckmittlers 140. Dieser Rohrdruckmittler 140 ähnelt sehr stark der Ausführungsvariante gemäß Figur 8 und 9 und besitzt ebenfalls einen rohrförmigen Körper 141 mit endseitigen Flanschanschlüssen 142 beziehungsweise 143. Der Rohrdruckmittler 140 ist mit einer Temperaturmesseinrichtung 144 ausgestaltet, welche mit einem Temperatursensor 145 bis in den Innenraum des rohrförmigen Körpers 141 ragt. Im Gegensatz zur vorherigen Ausführungsvariante ist dieser Rohrdruckmittler 140 mit zwei Membranen, dass heißt einer geteilten Membran 146, 147 ausgestattet. Die Membranen 146, 147 reichen hierbei bis an den Temperatursensor 145 heran und sind jeweils endseitig mit dem rohrförmigen Körper 141 verbunden. Der Temperatursensor 145 der Temperaturmesseinrichtung 144 ragt hierbei unmittelbar in den Innenraum des rohrförmigen Körpers 141 hinein. Bei dieser Ausführungsvariante ist es jedoch nicht erforderlich, dass die Temperaturmesseinrichtung 144 mit ihrem Temperatursensor 145 durch die Membran 147 hindurchgeführt ist und somit zwischen den beiden Membranen 146, 147 zu liegen kommt. Zum Anschluss eines Messsystems ist eine Vertiefung 149 mit Gewindebohrung vorgesehen. Die beiden Druckräume 152, 153 stehen über einen Verbindungskanal 151 in Wirkverbindung, wobei die Gewindebohrung für das Messsystem in den Verbindungskanal mündet.

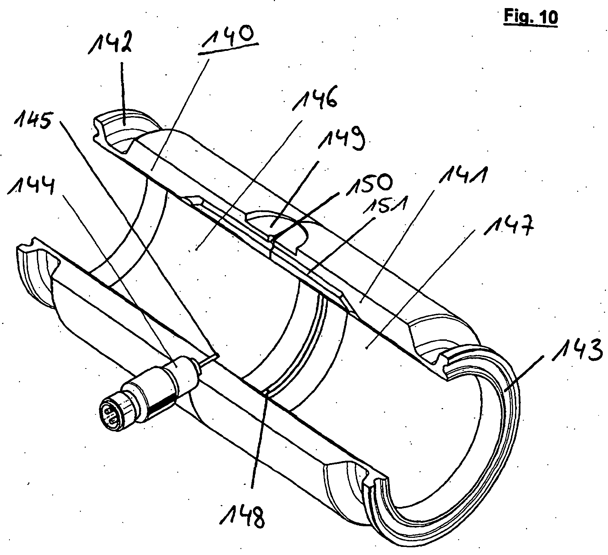

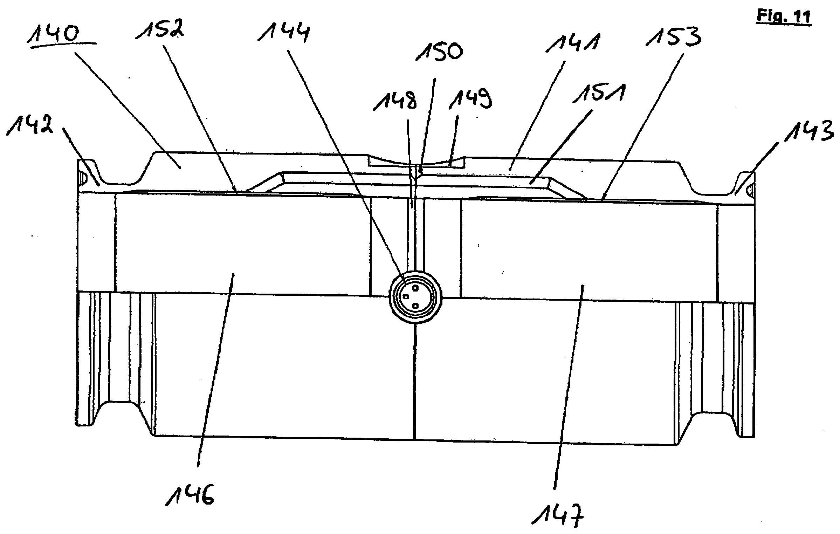

Figur 11 zeigt in einer geschnittenen Seitenansicht den aus Figur 10 bekannten Rohrdruckmittler 140. Aus dieser Ansicht wird deutlich, dass es sich um zwei Membranen 146, 147 handelt, welche endseitig mit dem rohrförmigen Körper 141 verbunden sind und zwischen den beiden Membranen 146, 147 der Temperatursensor 145 der Temperaturmesseinrichtung 144 in den rohrförmigen Körper 141 hineinragt.

### Bezugszeichenliste

- 1: Druckmittlergehäuse
- 2: Druckmittlergehäuse
- 3: Druckmittlergehäuse
- 5: Abschnitt
- 6: Hohlkehle
- 7: Vorsprung
- 8: Sechskant
- 9: Abschnitt
- 10: Stirnfläche
- 11: Membranbett
- 13: Bohrung
- 25: Abschnitt
- 26: Hohlkehle
- 27: Vorsprung
- 28: Sechskant
- 29: Abschnitt
- 30: Stirnfläche
- 31: Membranbett
- 32: Bohrung
- 33: Bohrung
- 34: Bohrung
- 45: Abschnitt
- 46: Hohlkehle
- 47: Vorsprung
- 48: Sechskant
- 49: Abschnitt
- 50: Stirnfläche
- 51: Membranbett
- 52: Bohrung
- 60: Temperaturmesseinrichtung
- 61: Gehäuse
- 62: Rohr
- 63: Temperatursensor
- 70: Membran
- 71: Membran
- 72: Membran
- 73: Ausnehmung
- 74: Ausnehmung
- 75: Ausnehmung
- 80: Rohrdruckmittler
- 81: Körper
- 82: Flanschanschluss
- 83: Flanschanschluss
- 84: Membran
- 85: Ringkanal
- 86: Bohrung
- 87: Ausnehmung
- 88: Temperaturmesseinrichtung
- 89: Temperatursensor
- 90: Gewindebohrung
- 100: Rohrdruckmittler
- 101: Körper
- 102: Flanschanschluss
- 103: Flanschanschluss
- 104: Membran
- 105: Ringkanal
- 106: Gewindebohrung
- 107: Vertiefung
- 108: Temperaturmesseinrichtung
- 109: Temperaturmesseinrichtung
- 110: Temperatursensor
- 111: Temperatursensor
- 120: Rohrdruckmittler
- 121: Körper
- 122: Flanschanschluss
- 123: Flanschanschluss
- 124: Temperaturmesseinrichtung
- 125: Ringkanal
- 126: Bohrung
- 127: Temperatursensor
- 128: Membran
- 140: Rohrdruckmittler
- 141: Körper
- 142: Flanschanschluss
- 143: Flanschanschluss
- 144: Temperaturmesseinrichtung
- 145: Temperatursensor
- 146: Membran
- 147: Membran
- 148: Ringkanal
- 149: Vertiefung
- 150: Vertiefung
- 151: Verbindungskanal
- 152: Druckraum
- 153: Druckraum

## Patentansprüche

1. Druckmittler mit Temperatursensor (63, 89, 110, 111, 127, 145) zum Einsatz bei aggressiven oder hochviskosen Medien in Form eines Plattendruckmittlers, umfassend zumindest ein Druckmittiergehäuse (1, 2, 3) mit einem in einer Ausnehmung eingelassenen Membranbett (11, 31, 51), einer Membran (70, 71, 72) und zumindest einem Temperatursensor (63) oder in Form eines Rohrdruckmittlers (80, 100, 120, 140), umfassend einen rohrförmigen Körper (81, 101, 121, 141) mit einem in einer Ausnehmung eingelassenen Membranbett, einer ringförmigen Membran (84, 104, 128, 146, 147), welche fluiddicht dem Membranbett (11, 31, 51) gegenüberliegend befestigt ist, und zumindest einem Temperatursensor (89, 110, 111, 127, 145),
**dadurch gekennzeichnet,**
**dass** der wenigstens eine Temperatursensor (63, 89, 110, 111, 127, 145) in direktem Kontakt mit dem Messstoff seht, wobei der Temperatursensor (63, 89, 110, 111, 127, 145) mit seinem Messfühler durch eine Ausnehmung (73, 74, 75), Einbuchtung oder Bohrung (52) der Membran (70, 71, 72, 84, 104, 128, 146, 147) hindurchragt.

2. Druckmittler mit Temperatursensor (89, 110, 111, 127, 145) zum Einsatz bei aggressiven oder hochviskosen Medien in Form eines Rohrdruckmittlers (80, 100, 120, 140), umfassend zumindest einen rohrförmigen Körper (81, 101, 121, 141) mit einem in einer Ausnehmung eingelassenen Membranbett, einer rohrförmigen Membran (84, 104, 128, 146, 147), welche fluiddicht dem Membranbett gegenüberliegend befestigt ist, und zumindest einem Temperatursensor (89, 110, 111, 127, 145),
**dadurch gekennzeichnet,**
**dass** eine annähernd rohrförmige Membran (84, 104, 128, 146, 147) in dem rohrförmigen Körper (81, 101, 121, 141) einliegt und endseitig mit diesem verbunden ist, wobei ein Druckraum über einen Ringkanal (85, 105, 148) und eine Bohrung mit einem Messsystem in Verbindung steht, und wobei zumindest ein Temperatursensor (89, 110, 111, 127, 145) endseitig der Membran (84, 104, 128, 146, 147) oder in Höhe des Ringkanals (85, 105, 148) befestigt ist und mit seinem Messfühler in den Innenraum des rohrförmigen Körpers (81, 101, 121, 141) ragt.

3. Druckmittler nach Anspruch 1,
**dadurch gekennzeichnet,**
**dass** der wenigstens eine Temperatursensor (63) annähernd senkrecht zur Membranebene angeordnet und im Druckimittlergehäuse (1, 2, 3) befestigt ist.

4. Druckmittler nach Anspruch 1,
**dadurch gekennzeichnet,**
**dass** die Membran (70, 71, 72) eine zentrisch öder exzentrisch angeordnete Bohrung zur Aufnahme des Temperatursensors (63) aufweist, wobei der Temperatursensor (63) mit der Membran (70, 71, 72) verlötet oder verschweißt ist.

5. Druckmittler nach Anspruch 1,
**dadurch gekennzeichnet,**
**dass** die Membran (70, 71, 72) eine zentrisch angeordnete Bohrung (52) aufweist, welche durch das Membranbett (51) oder einen Teil des Druckmittlergehäuses (3) ringförmig umschlossen und abgestützt ist.

6. Druckmittler nach Anspruch 1,
**dadurch gekennzeichnet,**
**dass** eine kreisringförmige Membran (70, 71) eine partielle Einbuchtung oder Ausnehmung (73, 74, 75) aufweist, welche im Randbereich der Membran (70, 71) angeordnet ist und einen Teilbereich der Stirnfläche (10, 30, 50) des Druckmittlergehäuses (1, 2, 3) freigibt.

7. Druckmittler nach einem der Ansprüche 1 bis 6,
**dadurch gekennzeichnet,**
**dass** der Temperatursensor (63, 89, 110, 111, 127, 145) frontbündig oder hervorstehend zur Membran (70, 71, 72, 84, 104, 128, 146, 147) angeordnet ist.

8. Druckmittler nach einem der Ansprüche 1 bis 7,
**dadurch gekennzeichnet,**
**dass** die Membran (70, 71, 72, 84, 104, 128, 146, 147) aufgelötet oder aufgeschweißt ist.

9. Druckmittler nach einem der Ansprüche 1 bis 8,
**dadurch gekennzeichnet,**
**dass** ein zweiter Temperatursensor (63, 111) unterhalb der Membran (70, 71, 72, 84, 104, 128, 146, 147) liegend angeordnet ist.

10. Druckmittler nach einem der Ansprüche 1 bis 9,
**dadurch gekennzeichnet,**
**dass** die Membran (70, 71, 72, 84, 104, 128, 146, 147) aus einem Sonderwerkstoff, wie Tantal, V4A, Titan, Nickel, Monel, Duplex, Inconel oder Hastelloy C 276 besteht oder mit einem Sonderwerkstöff der vorgenannten Art beschichtet ist.

11. Druckmittler nach einem der Ansprüche 1 bis 10,
**dadurch gekennzeichnet,**
**dass** das Druckmittlergehäuse (1, 2, 3) oder der rohrförmige Körper (81, 101, 121, 141) aus Edelstahl, zum Beispiel V2A oder V4A, oder einem Sonderwerkstoff, wie Tantal, Titan, Nickel, Monel, Duplex, inconel oder Hastelloy C 276 besteht oder mit einem Sonderwerkstoff der vorgenannten Art beschichtet ist.

## Claims

1. Diaphragm seal with temperature sensor (63, 89, 110, 111, 127, 145) to be used for aggressive or highly viscous media in the form of a plate-type diaphragm seal, comprising at least one diaphragm seal housing (1, 2, 3) having a membrane bed (11, 31, 51) embedded in a recess, a membrane (70, 71, 72) and at least one temperature sensor (63), or in the form of a tube-type diaphragm seal (80, 100, 120, 140), comprising a tubular body (81, 101, 121, 141) having a membrane bed embedded in a recess, an annular membrane (84, 104, 128, 146, 147) which is secured opposite said membrane bed (11, 31, 51) in a fluid-tight manner, and at least one temperature sensor (89, 110, 111, 127, 145),
**characterized in that**
said at least one temperature sensor (63, 89, 110, 111, 127, 145) is in direct contact with the substance to be measured, wherein said temperature sensor (63, 89, 110, 111, 127, 145) projects, with its transducer, through a recess (73, 74, 75), an indentation or a bore (52) of said membrane (70, 71, 72, 84, 104, 128, 146, 147).

2. Diaphragm seal with temperature sensor (89, 110, 111, 127, 145) to be used for aggressive or highly viscous media in the form of a tube-type diaphragm seal (80, 100, 120, 140), comprising at least one tubular body (81, 101, 121, 141) having a membrane bed embedded in a recess, a tubular membrane (84, 104, 128, 146, 147) which is fixed opposite to said membrane bed in a fluid-tight manner, and at least one temperature sensor (89, 110, 111, 127, 145),
**characterized in that**
an approximately tubular membrane (84, 104, 128, 146, 147) is seated in said tubular body (81, 101, 121, 141) and connected to it at an end side, wherein a pressure chamber is in communication with a measuring system via a ring channel (85, 105, 148) and a bore, and wherein at least one temperature sensor (89, 110, 111, 127, 145) is secured at the end side of the membrane (84, 104, 128, 146, 147) or at the level of the ring channel (85, 105, 148) and projects, with its transducer, into the interior of the tubular body (81, 101, 121, 141).

3. Diaphragm seal according to claim 1,
**characterized in that**
said at least one temperature sensor (63) is arranged approximately perpendicularl to the membrane plane and secured in the diaphragm seal housing (1, 2, 3).

4. Diaphragm seal according to claim 1,
**characterized in that**
said membrane (70, 71, 72) comprises a centrically or eccentrically arranged bore for receiving said temperature sensor (63), wherein said temperature sensor (63) is soldered or welded to said membrane (70, 71, 72).

5. Diaphragm seal according to claim 1,
**characterized in that**
said membrane (70, 71, 72) comprises a centrically arranged bore (52) which is annularly enclosed and supported by said membrane bed (51) or a part of said diaphragm seal housing (3).

6. Diaphragm seal according to claim 1,
**characterized in that**
a circular membrane (70, 71) comprises a partial indentation or recess (73, 74, 75) which is arranged in the edge region of the membrane (70, 71) and reveals a partial area of the front face (10, 30, 50) of the diaphragm seal housing (1, 2, 3).

7. Diaphragm seal according to one of claims 1 to 6,
**characterized in that**
said temperature sensor (63, 89, 110, 111, 127, 145) is arranged flush with the front or projecting from the membrane (70, 71, 72, 84, 104, 128, 146, 147).

8. Diaphragm seal according to one of claims 1 to 7,
**characterized in that**
said membrane (70, 71, 72, 84, 104, 128, 146, 147) is soldered or welded on.

9. Diaphragm seal according to one of claims 1 to 8,
**characterized in that**
a second temperature sensor (63, 111) is arranged so as to lie underneath said membrane (70, 71, 72, 84, 104, 128, 146, 147).

10. Diaphragm seal according to one of claims 1 to 9,
**characterized in that**
said membrane (70, 71, 72, 84, 104, 128, 146, 147) consists of a special material, such as tantalum, V4A, titanium, nickel, monel, duplex, Inconel, or Hastelloy C 276, or is coated with a special material of the aforementioned type.

11. Diaphragm seal according to one of claims 1 to 10,
**characterized in that**
said diaphragm seal housing (1, 2, 3) or said tubular body (81, 101, 121, 141) consists of high-grade steel, for example V2A or V4A, or a special material, such as tantalum, titanium, nickel, monel, duplex, Inconel or Hastelloy C 276, or is coated with a special material of the aforementioned type.

## Revendications

1. Séparateur comportant un capteur de température (63, 89, 110, 111, 127, 145), destiné à être utilisé dans des milieux agressifs ou à viscosité élevée, sous la forme d'un séparateur à disque, comprenant au moins un boîtier de séparateur (1, 2, 3) comportant un lit de membrane (11, 31, 51) encastré dans un évidement, d'une membrane (70, 71, 72) et au moins un capteur de température (63) ou sous la forme d'un séparateur tubulaire (80, 100, 120, 140), comprenant un corps tubulaire (81, 101, 121, 141) comportant un lit de membrane encastré dans un évidement, d'une membrane annulaire (84, 104, 128, 146, 147), qui est fixée opposée au lit de membrane (11, 31, 51) de manière étanche aux fluides, et au moins un capteur de température (89, 110, 111, 127, 145),
**caractérisé en ce que**
ledit au moins un capteur de température (63, 89, 110, 111, 127, 145) est en contact direct avec la matière à mesurer, le capteur de température (63, 89, 110, 111, 127, 145) dépassant avec sa sonde par un évidement (73, 74, 75), un enfoncement ou un trou (52) de la membrane (70, 71, 72, 84, 104, 128, 146, 147).

2. Séparateur comportant un capteur de température (89, 110, 111, 127, 145), destiné à être utilisé dans des milieux agressifs ou à viscosité élevée, sous la forme d'un séparateur tubulaire (80, 100, 120, 140), comprenant au moins un corps tubulaire (81, 101, 121, 141) comportant un lit de membrane encastré dans un évidement, d'une membrane tubulaire (84, 104, 128, 146, 147), qui est fixée opposée au lit de membrane de manière étanche aux fluides, et au moins un capteur de température (89, 110, 111, 127, 145),
**caractérisé en ce que**
une membrane approximativement tubulaire (84, 104, 128, 146, 147) est placée dans le corps tubulaire (81, 101, 121, 141) et est reliée à celui-ci du côté de son extrémité, une chambre de pression étant en liaison avec un système de mesure par le biais d'un canal annulaire (85, 105, 148) et d'un trou, et au moins un capteur de température (89, 110, 111, 127, 145) étant fixé du côté extrémité de la membrane (84, 104, 128, 146, 147) ou à hauteur du canal annulaire (85, 105, 148) et dépassant avec sa sonde dans l'espace intérieur du corps tubulaire (81, 101, 121, 141).

3. Séparateur selon la revendication 1,
**caractérisé en ce que**
ledit au moins un capteur de température (63) est disposé approximativement perpendiculairement au plan de la membrane et est fixé dans le boîtier de séparateur (1, 2, 3).

4. Séparateur selon la revendication 1,
**caractérisé en ce que**
la membrane (70, 71, 72) comporte un trou disposé de manière centrée ou excentrée pour le logement du capteur de température (63), le capteur de température (63) étant brasé ou soudé avec la membrane (70, 71, 72).

5. Séparateur selon la revendication 1,
**caractérisé en ce que**
la membrane (70, 71, 72) comporte un trou (52) disposé de manière centrée, qui est entouré et soutenu de manière anniulaire par le lit de membrane (51) ou une partie du boîtier de séparateur (3).

6. Séparateur selon la revendication 1,
**caractérisé en ce que**
une membrane (70, 71) circulaire comporte un enfoncement ou évidement partiel (73, 74, 75), qui est disposé dans la zone de bord de la membrane (70, 71) et dégage une zone partielle de la face frontale (10, 30, 50) du boîtier de séparateur (1, 2, 3).

7. Séparateur selon l'une des revendications 1 à 6,
**caractérisé en ce que**
le capteur de température (63, 89, 110, 111, 127, 145) est disposé affleurant la membrane (70, 71, 72, 84, 104, 128, 146, 147) ou dépassant de celle-ci.

8. Séparateur selon l'une des revendications 1 à 7,
**caractérisé en ce que**
la membrane (70, 71, 72, 84, 104, 128, 146, 147) est brasée ou soudée.

9. Séparateur selon l'une des revendications 1 à 8,
**caractérisé en ce que**
un second capteur de température (63, 111) est disposé couché en dessous de la membrane (70, 71, 72, 84, 104, 128, 146, 147).

10. Séparateur selon l'une des revendications 1 à 9,
**caractérisé en ce que**
la membrane (70, 71, 72, 84, 104, 128, 146, 147) est constituée d'un matériau spécial, tel que le tantale, le V4A, le titane, le nickel, le Monel, l'acier duplex, l'Inconel ou l'Hastelloy C 276 ou est revêtue d'un matériau spécial du type mentionné ci-dessus.

11. Séparateur selon l'une des revendications 1 à 10,
**caractérisé en ce que**
le boîtier de séparateur (1, 2, 3) ou le corps tubulaire (81, 101, 121, 141) est constitué d'acier inoxydable, par exemple de V2A ou V4A, ou d'un matériau spécial tel que le tantale, le titane, le nickel, le Monel, l'acier duplex, l'Inconel ou l'Hastelloy C 276 ou est revêtu d'un matériau spécial du type mentionné ci-dessus.
